# EUROPEAN PATENT SPECIFICATION

(11) **EP 0 676 838 B1**
(45) Date of publication and mention of the grant of the patent: **29.10.1997**
(21) Application number: 95301296.0
(22) Date of filing: 28.02.1995
(51) Int. Cl.: H01S 3/041, H01S 3/03, H01S 3/02

(54) **A laser assembly**
Laser-System
Systéme laser

(30) Priority: 07.04.1994 GB 9406861
(43) Date of publication of application: 11.10.1995
(73) Proprietor: GEC-MARCONI LIMITED, Stanmore, Middlesex HA7 4LY (GB)
(72) Inventor: Lewis, Edward Lloyd, Rockwell Bungalow, Maidstone, Kent ME15 0HU (GB)
(74) Representative: Goddin, Jeremy Robert

(56) References cited:
- EP-A- 0 587 092
- WO-A-86/01344
- WO-A-88/04845
- GB-A- 2 178 185

## Description

This invention relates to a laser assembly.

Lasers have an optical resonant cavity with two or more accurately aligned mirrors and it is essential that they are rigidly mounted and do not become misaligned due to thermal expansion or mechanical shock. This is a demanding criteria, particularly for lasers with long optical cavities, requiring substantial support to prevent bending of the cavity which adds significantly to the overall weight. For example a CO₂ waveguide laser may be typically 600mm long with a ceramic core supporting the cavity mirrors. This core contains the laser waveguide bore, gas reservoir and cooling liquid. The core is supported by an outer structure, often manufactured from invar to match the thermal expansion of the ceramic. The result is a highly stable construction but with a heavy weight penalty, typically 8kgs. There is a limit to the degree of weight saving that can be achieved by traditional methods such as removing material, as a point will be reached where stiffness and thermal expansion stability will be compromised. Also the resulting complex structure becomes expensive to manufacture.

According to the invention there is provided a laser cavity in an elongated core having a mean density which core is supported in an elongated chamber or housing spaced from the inner wall or walls of the chamber or housing so as to provide a gap between the core and the inner wall or walls of the chamber or housing which gap is filled with a fluid medium having the same density as the mean density of said core.

Preferably the laser core and the chamber or housing are mounted at one end thereof on a base plate.

The size of said gap has such dimensions that the assembly accommodates differential thermal expansion between the core and the chamber or housing. Further the gap is shaped to enhance viscous drag of the fluid medium to afford support to the core when shear forces are induced in the fluid by external mechanical disturbances. The gap may be of a cruciform cross-section or any other shape which would enhance viscous drag of the fluid medium.

Preferably the assembly further includes an outer rigid structure to support said chamber or housing along its length so as to strengthen the assembly. The outer structure may be of tubular form. In an alternative embodiment the outer structure includes a plurality of spaced apart buttresses fixed along the length of said chamber or housing. The core includes a wave guide hole and a plurality of auxiliary holes to achieve the desired mean density. The auxiliary holes may be used as gas reservoirs. Preferably the core is made of ceramic material and said fluid medium is silicon fluid. The housing or chamber may be made of aluminium.

The assembly embodying the invention significantly reduces stresses on the waveguide core caused by external mechanical disturbances, and allows thermal expansion to be accommodated without recourse to heavy supporting structures. The core is immersed in a liquid of equal density, so that it exhibits neutral buoyancy. Acceleration produces equal forces upon the liquid and core, therefore there is no resultant force upon the core to cause its distortion.

The core is primarily designed to minimise the effects of thermal expansion by ensuring stable linear expansion. The strength of its structure is reduced and support is provided by an external housing or chamber which is designed to have a maximum strength to weight ratio. The volume of liquid used is sufficient to provide clearance between the core and outer vessel to accommodate any relative movement predominately due to thermal expansion.

Neutral buoyancy compensates for linear acceleration, however liquid is less able to support the core when subjected to shear forces, which is the case for angular acceleration, and is only able to impart a force due to its viscosity. High viscosity liquid will improve rotational support but it must still permit free relative expansion between the core and the housing.

The chamber or housing and the outer supporting structure must not deflect significantly under acceleration or vibration, therefore these must be rigid and highly damped to any structural vibration. These external structures may be lightened by punching holes in them, the raised sides of which will add to the overall stiffening.

The housing or chamber is separated from the laser core, and does not require low or highly stable thermal expansion. A bellows reservoir for the fluid accommodates volume changes that result from differential thermal expansion in the fluid, the core and the chamber or housing.

A C0₂ laser generates heat in the waveguide due to pumping inefficiencies. Traditionally water cooling is used to remove this waste heat and to minimise temperature gradients in the laser which adds to the weight and cost. The laser assembly embodying the invention has a cruciform design which provides a large surface area capable of efficient heat removal by simple forced air flow. Heat exchange is further enhanced by the tubular outer structure ducting the air along the structure.

Considerable weight savings to the overall laser assembly may be made when the base plate for the laser is also used as an optical bench for the ancillary optics of the system. In addition to weight savings there are potential cost savings to be made. The manufacturing method for the conventional waveguide laser assembly involves precision machining of a trench in the ceramic for the waveguide bore. The trench is closed with an additional ceramic plate and the mating surfaces bonded together using a glazing process. The laser assembly including the housing and core may be constructed by extrusion techniques. Extrusion is capable of producing precision bores in the ceramic core together with the required surface finish of the waveguide, also the cruciform aluminium outer housing and the tubular outer structure may be combined in one extruded form, thereby further reducing the weight and cost. Extrusion offers the potential for large scale, low cost manufacture of these assemblies. The supporting structure involves straight forward sheet metal techniques with the final assembly possibly using adhesive bonding.

Neutral buoyancy floatation provides separation of the housing from the optical core thus enabling thermal expansion and mechanical support to be considered separately facilitating optimal designs for the respective components. Separating the expansion and support requirements permits a flexible design strategy to be taken offering considerable weight and cost savings. Further weight reductions are possible by adopting an integrated approach for the key optical elements which avoids using a separate optical bench.

The invention will now be further described by way of example with reference to the accompanying drawings in which:-
Figure 1 illustrates a laser assembly embodying the present invention; and
Figure 2 illustrates another embodiment of the present invention.

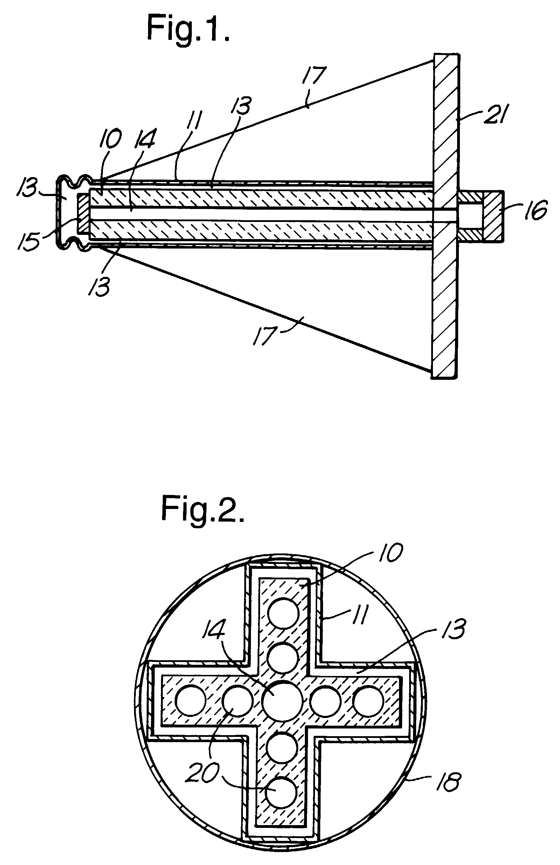

The laser assembly of the present invention as illustrated in Figure 1 includes an elongated ceramic core 10 having an elongated laser cavity 14 and a mirror 15 arranged at one end thereof and an output mirror 16 arranged at the other end thereof. The core 10 is mounted on a base plate 21 at the other end of the cavity 14. The base plate 21 may be used as an optical bench. The core 10 is supported in an elongated outer housing 11 of which the end ajacent the mirror 15 is closed, as shown, by the bellows reservoir. The core 10 is spaced from the side wall of the housing 11 and is also spaced from the housing end wall adjacent the mirror 15 so to provide a gap 13 around the core. The gap 13 is filled with a fluid medium which has the same density as the mean density of the core 10. The mean density of the core may be adjusted by forming holes therein to match the density of the fluid medium. The laser assembly including the core 10 and housing 11 is supported as a cantilever from the base plate 21. The outer wall of the housing 11 is braced with a plurality of external buttresses 17 to increase rigidity and strength of the laser assembly without adding any excessive weight thereto. Preferably the base plate 21 is a square and the buttresses 17 are placed on the diagonals of the square. In the embodiment shown in Figure 2, the core 10 and the outer housing 11 are closely fitting cruciforms to form the gap 13 having a cruciform cross-section. The cruciform gap 13 is filled with the fluid medium having a density equal to the density of the ceramic core. The cruciform construction of this embodiment enhances the viscous drag of the fluid medium to afford support to the components of the laser assembly when shear forces are induced in the fluid by external mechanical disturbances. The cruciform housing 11 is supported in an outer structure to increase the rigidity and strength of the assembly. The outer structure may be a tubular structure 18 as shown in Figure 2 and/or buttresses 17 as shown in Figure 1. The core is formed with the central laser waveguide bore 14 and a plurality of auxiliary bores 20. The bores 20 are formed in the ceramic core to bring the mean density of the core 10 to match that of the fluid medium in the gap 13. The bores 20 may be used to store reserve gas such as CO₂. The bores 20 adjacent the central bore 14 are metal plated as electrodes for RF pumping of the laser. A gap of 1mm round the core provides sufficient clearance to accommodate movement due to differential thermal expansion between the core and the housing.

The mean density of the core is reduced to match a suitable fluid silicon oil e.g. "Krytox" density 1.9gm/cc. The housing and supporting structure may be manufactured in 1mm thick aluminium, density 2.7 gm/cc.

## Claims

1. A laser assembly including an elongated laser cavity (14) in an elongated core (10) having a mean density which core is supported in an elongated chamber or housing (11) spaced from the inner wall or walls of the chamber or the housing so as to provide a gap (13) between the core and the inner wall or walls of the chamber or housing which gap is filled with a fluid medium having the same density as the mean density of said core.

2. A laser assembly as claimed in claim 1, in which the laser core and the chamber or housing are mounted at one end thereof on a base plate (21).

3. A laser assembly as claimed in claim 1 or 2, in which the size of said gap is sufficient to accommodate differential thermal expansion between the core and the chamber or housing.

4. A laser assembly as claimed in any one of claims 1 to 3, in which the gap is shaped to enhance viscous drag of the fluid medium to afford support to the core when shear forces are induced in the fluid by external mechanical disturbances

5. A laser assembly as claimed in claim 4, in which the core and the chamber or housing are shaped to provide said gap of a cruciform cross-section.

6. A laser assembly as claimed in any one of the preceding claims, including an outer rigid structure (17) to support said chamber or housing along its length.

7. A laser assembly as claimed in claim 6, in which said outer structure (18) is tubular.

8. A laser assembly as claimed in claim 6, in which said outer structure includes a plurality of spaced apart buttresses (17) fixed along the length of said chamber or housing.

9. A laser assembly as claimed in any one of the preceding claims, in which the core includes a wave guide hole (14) and a plurality of auxiliary holes (20) to achieve the desired mean density.

10. A laser assembly as claimed in any one of the preceding claims, in which said core is made of ceramic material and said fluid medium is silicon fluid.

## Patentansprüche

1. Eine Lasermontage enthaltend einen Länglichen Laserresonator (14) in einem länglichen Kern (10) mit einer mittleren Dichte, der in einer länglichen Kammer oder in einem länglichen Gehäuse (11) in einem Abstand von der inneren Wand oder den inneren Wänden der Kammer oder des Gehäuses gehalten wird, derart, daß ein Zwischenraum (13) zwischen dem Kern und der inneren Wand oder den inneren Wänden der Kammer oder des Gehäuses existiert, der mit einem flüssigen Medium gefüllt ist, das die gleiche Dichte aufweist wie die mittlere Dichte des genannten Kerns.

2. Eine Lasermontage nach Anspruch 1, bei der der Laserkern und die Kammer oder das Gehäuse an einem ihrer Enden an einer Grundplatte (21) gehalten werden.

3. Eine Lasermontage nach Ansprüchen 1 oder 2, bei der die Größe des Zwischenraums ausreicht, um die Unterschiede in der thermischen Ausdehnung von Kern und Kammer cder Gehäuse aufzunehmen.

4. Eine Lasermontage nach einem der Ansprüche 1 bis 3, bei der der Zwischenraum so geformt ist, daß der Strömungswiderstand des fluiden Mediums erhöht wird, um den Kern zu stützen, wenn durch äußere mechanische Störungen Scherkräfte in dem fluiden Medium hervorgerufen werden.

5. Eine Lasermontage gemäß Anspruch 4, gekennzeichnet dadurch, daß der Kern und die Kammer oder das Gehäuse so geformt sind, daß der Zwischenraum einen kreuzförmigen Querschnitt hat.

6. Eine Lasermontage gemäß einem der vorhergehenden Ansprüche, die einen äußere steife Struktur (17) aufweist, die die Kammer oder das Gehäuse entlang der Längsachse stützt.

7. Eine lasermontage gemäß Anspruch 6, bei der die äußere Struktur (18) röhrenförmig ist.

8. Eine Lasermontage gemäß Anspruch 6, bei der die äußere Struktur eine Anzahl von in Abständen angebrachten Streben (17) entlang der Längsachse der Kammer oder des Gehäuses enthält.

9. Eine lasermontage gemäß einem der vorhergehenden Ansprüche, gekennzeichnet dadurch, daß der Kern eine Wellenleiterbohrung (14) und eine Anzahl von zusätzlichen Löchern (20) enthält, so daß die gewünschte mittlere Dichte erhalten wird.

10. Eine Lasermontage gemäß einem der vorhergehenden Ansprüche, gekennzeichnet dadurch, daß der Kern aus keramischem Material hergestellt ist und das fluide Medium ein Silikonfluid ist.

## Revendications

1. Ensemble à laser comprenant une cavité laser allongée (14) dans un noyau allongé (10) ayant une masse volumique moyenne, le noyau étant supporté dans une chambre ou un boîtier allongé (11) à distance de la paroi ou des parois internes de la chambre ou du boîtier afin qu'un espace (13) soit formé entre le noyau et la paroi ou les parois internes de la chambre ou du boîtier, cet espace étant rempli d'un milieu fluide ayant une masse volumique égale à la masse volumique moyenne du noyau.

2. Ensemble à laser selon la revendication 1, dans lequel le noyau du laser et la chambre ou le boîtier sont montés à une première extrémité sur une plaque de base (21).

3. Ensemble à laser selon la revendication 1 ou 2, dans lequel la dimension de l'espace est suffisante pour permettre la compensation de la dilatation thermique différentielle entre le noyau et la chambre ou le boîtier.

4. Ensemble à laser selon l'une quelconque des revendications 1 à 3, dans lequel l'espace a une configuration qui augmente la traînée visqueuse du milieu fluide assurant le support du noyau lorsque les forces dues au gradient de vitesse sont induites dans le fluide par des perturbations mécaniques externes.

5. Ensemble à laser selon la revendication 4, dans lequel le noyau et la chambre de boîtier ont une configuration donnant audit espace une section cruciforme.

6. Ensemble à laser selon l'une quelconque des revendications précédentes, comprenant une structure rigide externe (17) destinée à supporter la chambre ou le boîtier sur sa longueur.

7. Ensemble à laser selon la revendication 6, dans lequel la structure externe (18) est tubulaire.

8. Ensemble à laser selon la revendication 6, dans lequel la structure externe comporte plusieurs arcs-boutants espacés (17) fixés sur la longueur de la chambre ou du boîtier.

9. Ensemble à laser selon l'une quelconque des revendications précédentes, dans lequel le noyau comporte un trou (14) de guidage d'ondes et plusieurs trous auxiliaires (20) destinés à donner la masse volumique moyenne voulue.

10. Ensemble à laser selon l'une quelconque des revendications précédentes, dans lequel le noyau est formé d'un matériau céramique, et le milieu fluide est un fluide de silicone.
